(19) 

**Europäisches Patentamt**
**European Patent Office**
**Office européen des brevets**

(11) **EP 4 528 650 B1**

(12) **EUROPEAN PATENT SPECIFICATION**

(45) Date of publication and mention
of the grant of the patent:
**14.01.2026 Bulletin 2026/03**

(51) International Patent Classification (IPC):
**G06T 11/00** (2026.01)    **G06N 3/045** (2023.01)
**G06N 3/08** (2023.01)     **G06V 10/26** (2022.01)
**G06V 10/82** (2022.01)

(21) Application number: **24196353.7**

(22) Date of filing: **26.08.2024**

(52) Cooperative Patent Classification (CPC):
**G06T 11/00; G06N 3/045; G06N 3/08; G06V 10/26;**
**G06V 10/82;** G06T 2207/10016; G06T 2207/20084;
G06T 2207/30236; G06T 2207/30252

(54) **GENERATIVE ARTIFICIAL INTELLIGENCE BASED SYNTHETIC DATA GENERATION FOR VISION-BASED SYSTEMS**

GENERATIVE KÜNSTLICHE INTELLIGENZBASIERTE ERZEUGUNG SYNTHETISCHER DATEN FÜR SICHTBASIERTE SYSTEME

GÉNÉRATION DE DONNÉES SYNTHÉTIQUES BASÉE SUR L'INTELLIGENCE ARTIFICIELLE GÉNÉRATIVE POUR DES SYSTÈMES BASÉS SUR LA VISION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **21.09.2023 IN 202321063543**

(43) Date of publication of application:
**26.03.2025 Bulletin 2025/13**

(73) Proprietor: **Tata Consultancy Services Limited**
**Maharashtra (IN)**

(72) Inventors:
• **RAJAN, MANOJ CHATHANKULANGARA**
**560009 Bangalore, Karnataka (IN)**
• **THAYYILRAVI, ARUNKRISHNA**
**560009 Bangalore, Karnataka (IN)**
• **SONI, RAJAT KUMAR**
**560066 Bangalore, Karnataka (IN)**
• **NAIR, GOKUL GOPINATHAN**
**560066 Bangalore, Karnataka (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **SONI RAJAT KUMAR ET AL: "Deep Learning Based Approach to Generate Realistic Data for ADAS Applications", 2021 5TH INTERNATIONAL CONFERENCE ON COMPUTER, COMMUNICATION AND SIGNAL PROCESSING (ICCCSP), IEEE, 24 May 2021 (2021-05-24), pages 1 - 5, XP033935704, DOI: 10.1109/ ICCCSP52374.2021.9465529**
• **ARUN MALLYA ET AL: "World-Consistent Video-to-Video Synthesis", ARXIV.ORG, CORNELL UNIVERSITY LIBRARY, 201 OLIN LIBRARY CORNELL UNIVERSITY ITHACA, NY 14853, 16 July 2020 (2020-07-16), XP081722016**
• **CHENG BOWEN ET AL: "Panoptic-DeepLab: A Simple, Strong, and Fast Baseline for Bottom-Up Panoptic Segmentation", 2020 IEEE/CVF CONFERENCE ON COMPUTER VISION AND PATTERN RECOGNITION (CVPR), IEEE, 13 June 2020 (2020-06-13), pages 12472 - 12482, XP033804759, DOI: 10.1109/ CVPR42600.2020.01249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS AND PRIORITY

The present application claims priority to Indian application no. 202321063543 filed on September 21, 2023.

TECHNICAL FIELD

The disclosure herein generally relates to the field of data generation and, more particularly, to a method and system for generative artificial intelligence based synthetic data generation for vision-based systems.

BACKGROUND

Vision-based systems and its application in autonomous vehicles like Advanced Driver Assistance Systems (ADAS) are evolving day by day. Driver assistance systems are mainly learning autonomous driving models and one of the main factors that is in focus for this deep learning models is the need for real-world/realistic datasets for training. The quality, quantity and diversity of these datasets are an important aspect while training, testing and validating deep learning models. Further, training any model corresponding to different conditions is a big challenge as it is difficult to have a dataset which includes multiple geographies, different weather conditions, varying surroundings and road conditions.

According to a research report, for reliability in terms of safety and security, an autonomous vehicles needs to be driven billions of miles and so it requires almost 10 years for collecting all required datasets. This manual driving approach to collect datasets would also requires manpower and proper sensor configurations which eventually will be expensive approach. Some conventional Simulators can reduce the reality gap and generate huge trainable datasets, but the rendered scenarios appear unrealistic compared to real world scenarios. Deep neural networks can help us to generate realistic data which is specific to the ADAS applications under consideration. However, all the above mentioned approaches require meaningful datasets for training which is still unaddressed.

SONI RAJAT KUMAR ET AL: "Deep Learning Based Approach to Generate Realistic Data for ADAS Applications" discloses a method to generate realistic data using a GAN (Generative Adversarial Networks) based approach in which given an input image, the generator first synthesizes a fake image. Then the fake image is combined with the input image and put into the discriminator, which should be able to determine if it is fake. On the other hand, when a real image is used, the discriminator should be able to output real. So, during generator training, the goal of the generator is to ensure that the discriminator considers the output as real (Abstract).

SUMMARY

Embodiments of the present disclosure present technological improvements as solutions to one or more of the above-mentioned technical problems recognized by the inventors in conventional systems. The invention is set out in appended claim set.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for Generative Artificial Intelligence (GenAI) based synthetic data generation for vision-based systems, in accordance with some embodiments of the present disclosure.

FIG. 2 illustrates a functional architecture of the system of FIG. 1, for GenAI based synthetic data generation for vision-based systems, in accordance with some embodiments of the present disclosure.

FIG. 3 is an exemplary flow diagram illustrating a processor implemented method for GenAI based synthetic data generation for vision-based systems implemented by the system of FIG. 1 according to some embodiments of the present disclosure.

FIG. 4 is an exemplary flow diagram illustrating a processor implemented method for computing flow embedding implemented by the system of FIG. 1 according to some embodiments of the present disclosure.

FIG. 5 is an exemplary deep learning network for extracting the flow embedding for GenAI based synthetic data generation for vision-based systems implemented by the system of FIG. 1 according to some embodiments of the present disclosure.

FIG. 6 is an exemplary multi-Panoptic Geography Assistive Normalization (multi-PGAN) architecture for GenAI based synthetic data generation for vision-based systems implemented by the system of FIG. 1 according to some embodiments of the present disclosure.

FIG. 7 illustrates the architecture of multi-PGAN residual blocks associated with the multi-PGAN architecture for GenAI based synthetic data generation for vision-based systems implemented by the system of FIG. 1 according to some embodiments of the present disclosure.

FIG. 8 is an architecture diagram of the PGAN for GenAI based synthetic data generation for vision-based systems implemented by the system of FIG. 1 according to some embodiments of the present disclosure.

FIG. 9 is a discriminator architecture of the multi-PGAN based image generator for GenAI based synthetic data generation for vision-based systems implemented by the system of FIG. 1 according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Vision-based systems and its application in autonomous vehicles like Advanced Driver Assistance Systems (ADAS) are evolving day by day. One of the main factors that is in focus is the availability of real-world/realistic datasets for training deep-learning based autonomous driving models. The quality, quantity and diversity of these realistic datasets are an important aspect while training, testing and validating the deep learning models. Conventional deep neural networks can contribute to generate realistic data which is specific to the ADAS applications under consideration. However, all the above mentioned approaches require meaningful datasets for autonomous driving.

To have meaningful/realistic datasets for autonomous driving, it is important to have the right contextual information. There may be requirement to convert the legacy data captured with smaller Field of View (FOV) camera to larger FOV or there could be a need to generate larger datasets from limited data available from a specific geography to generate such realistic datasets. On the other hand, there are also certain limitations in sharing per data which has some personal information like human faces, number plates and the like in certain regions due to General Data Protection Regulation (GDPR) and the personal information needs to be anonymized. Such data need to be augmented with synthetic data so that it can be used for training or validation. All these requirements are different in terms of context, region, and scenarios. It is difficult to have a simulation platform which can generalize these different parameters. There are some advanced simulators provided by different vendors which can generate realistic synthetic data. However, they need complex prerequisites and various processes to be followed to generate such data and are quite expensive as well.

To overcome the challenges of the conventional approaches, embodiments herein provide a system and method to build an environment which provides one stop solution for different Artificial Intelligence (AI) rendering, scenario generation and future video prediction. In this invention, the proposed methodology provides a provision for fusion of Generative AI (GenAI), deep learning and image processing techniques and explores the possibilities of generating data from simulated, real, or fused environments. The present disclosure utilizes panoptic Segmentation based approach to create semantic labels. Further, the present disclosure includes a flow map-based methodology for extracting cues from a sequence of frames associated with an input video. The cue information/flow embedding helps to address long time temporal coherence which is a key issue in generating synthetic data. The cue information along with the semantic labels/label embedding and a plurality of insertion parameters pertaining to each of the plurality of target objects to be included/inserted are given as an input to the Generative AI network like GAN (Generative Adversarial Network) which has a unique methodology to generate synthetic dataset based on the aspects of static objects, dynamic objects, scene changing and environment variations. For example, in case of dataset creation or updating existing dataset for ADAS, the dynamic objects are pedestrians, moving cars and the like. The static objects can be any obstacle on the sides of a road. These dynamic objects and the static object are inserted into input image frames to create new dataset or to update existing dataset. In one embodiment, the environment of the road is changed. In another embodiment some scenes are changed. In some other embodiment, the width of the road can be increased or decreased and the like.

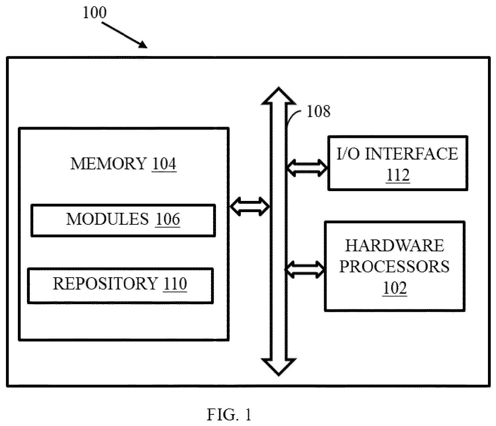

Referring now to the drawings, and more particularly to FIGS. 1 through 9, where similar reference characters denote corresponding features consistently throughout the figures, there are shown preferred embodiments and these embodiments are described in the context of the following exemplary system and/or method.

FIG. 1 is a functional block diagram of a system 100 for generative artificial intelligence based synthetic data generation for vision-based systems, in accordance with some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may further include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

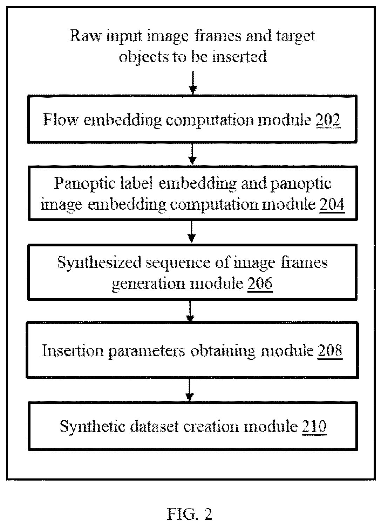

The plurality of modules 106 include programs or coded instructions that supplement applications or functions performed by the system 100 for generative artificial intelligence based synthetic data generation for vision-based systems. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for generative artificial intelligence based synthetic data generation for vision-based systems. In an embodiment, the plurality of modules 106 include a flow embedding computation module 202 (shown in FIG. 2), a panoptic label embedding and panoptic image embedding computation module 204, a synthesized sequence of image frames generation module 206 (shown in FIG. 2), an insertion parameters obtaining module 208 (shown in FIG. 2), and a synthetic dataset creation module 210 (shown in FIG. 2). In an embodiment, FIG. 2 illustrates a functional architecture of the system of FIG. 1, for generative artificial intelligence based synthetic data generation for vision-based systems, in accordance with some embodiments of the present disclosure.

The data repository (or repository) 110 may include a plurality of abstracted piece of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

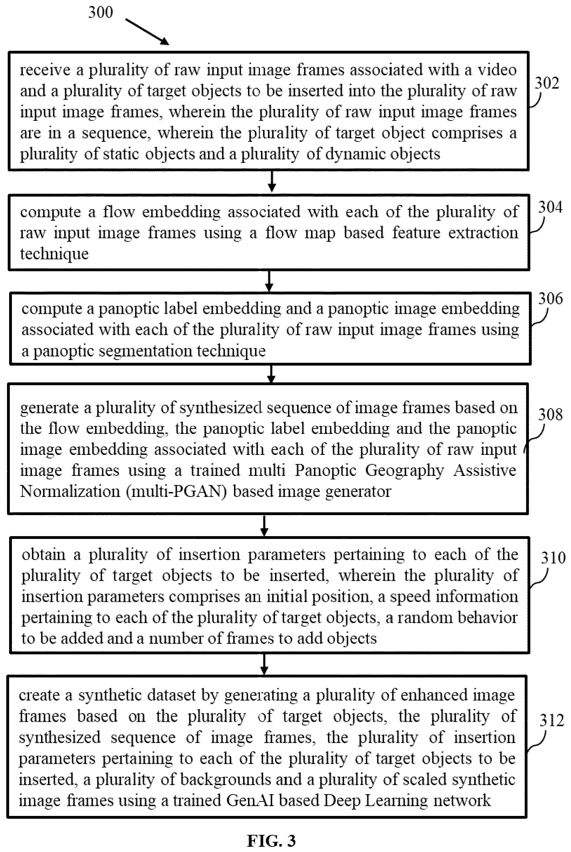

FIG. 3 is an exemplary flow diagram illustrating a method 300 for generative artificial intelligence based synthetic data generation for vision-based systems implemented by the system of FIG. 1 according to some embodiments of the present disclosure. In an embodiment, the system 100 includes one or more data storage devices or the memory 104 operatively coupled to the one or more hardware processor(s) 102 and is configured to store instructions for execution of steps of the method 300 by the one or more hardware processors 102. The steps of the method 300 of the present disclosure will now be explained with reference to the components or blocks of the system 100 as depicted in FIG. 1 and the steps of flow diagram as depicted in FIG. 3. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

At step 302 of the method 300, the one or more hardware processors 102 are configured by the programmed instructions to receive a plurality of raw input image frames associated with a video and a plurality of target objects to be inserted into the plurality of raw input image frames, wherein the plurality of raw input image frames are in a sequence, wherein the plurality of target object comprises a plurality of static objects and a plurality of dynamic objects.

At step 304 of the method 300, the flow embedding computation module 202 executed by one or more hardware processors 102 is configured by the programmed instructions to compute a flow embedding associated with each of the plurality of raw input image frames using a flow map based feature extraction technique.

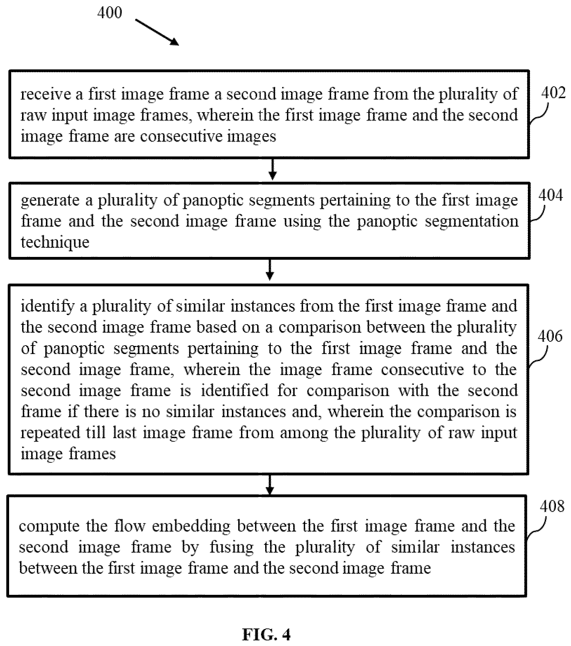

The steps for extracting the flow embedding associated with each of the plurality of raw input image frames using a flow map based feature extraction technique is explained in conjunction with FIG. 4. Now referring to FIG. 4, initially at step 402 of the method 400, the one or more hardware processors are configured by the programmed instruction to receive a first image frame a second image frame from the plurality of raw input image frames, wherein the first image frame and the second image frame are consecutive images. After receiving the first and the second image frames, a plurality of panoptic segments pertaining to the first image frame and the second image frame are generated by the one or more hardware processors using the panoptic segmentation technique at step 404. Further, at step 406 of the method 400, the one or more hardware processors are configured by the programmed instructions to identify a plurality of similar instances from the first image frame and the second image frame based on a comparison between the plurality of panoptic segments pertaining to the first image frame and the second image frame. The image frame consecutive to the second image frame (third frame) is identified for comparison with the second frame if there is no similar instances and the process is repeated until all image frames from among the plurality of image frames are compared with its neighbor. Further, at step 408 of the method 400, the one or more hardware processors are configured by the programmed instructions to compute the flow embedding between the first image frame and the second image frame by fusing the plurality of similar instances between the first image frame and the second image frame.

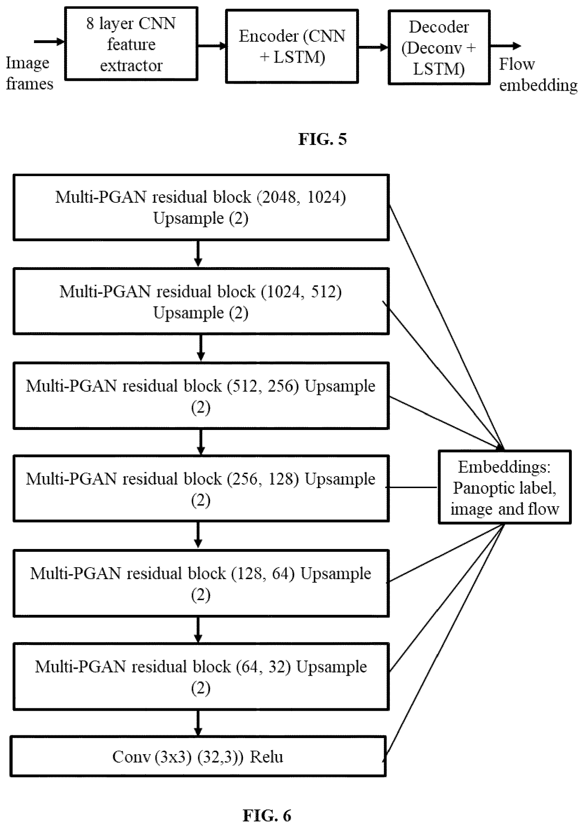

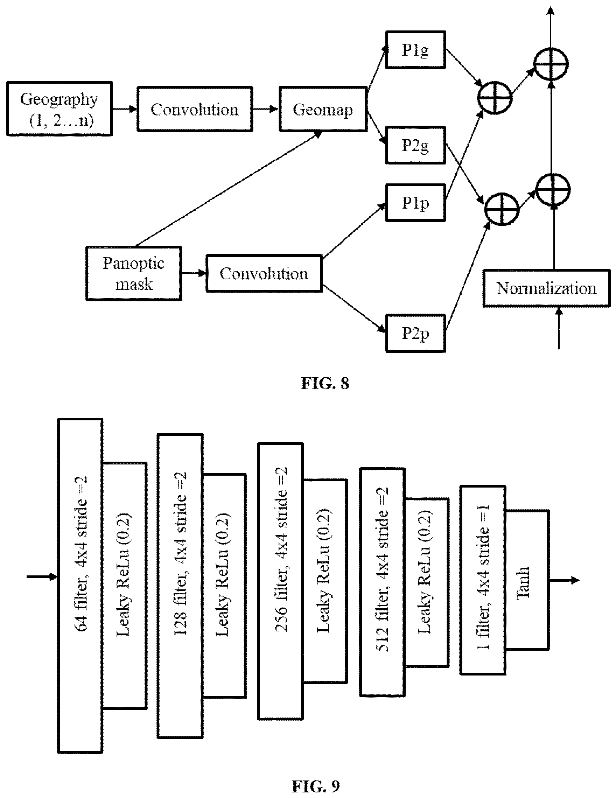

In an embodiment, the deep learning network for extracting the flow embedding is explained in conjunction with FIG. 5. Referring to FIG. 9, the deep learning network for extracting flow embedding utilizes 2 consecutive frames and corresponding panoptic segmentation. The approach uses 8-layer Convolutional Neural Network (CNN) based feature extractor with resolution decreasing half with increase in no of channel. The extracted flow embeddings are passed to a Long Short Term Memory (LSTM) based proposed network which further encodes to lower dimension features. During decoding, optical flow estimation happens with motion feature extracted from convolutional LSTM. Loss functions like Karhunen-Loève transform (KLT) and Fr'echet Inception Distance (FID) loss, pixel brightness loss, structural similarity as well as warp loss is used to fine tune flow values. Two different weights were used for City and Highway to predict optical flow more accurately on diverse scenarios.

Now referring to FIG. 3, at step 306 of the method 300, the panoptic label embedding and the panoptic image embedding computation module 204 executed by the one or more hardware processors 102 is configured by the programmed instructions to compute a panoptic label embedding and a panoptic image embedding associated with each of the plurality of raw input image frames using a panoptic segmentation technique. The panoptic image segmentation technique analyzes each image pixel and assigns a unique class label and an instance identifier.

At step 308 of the method 300, the synthesized sequence of image frames generation module 206 executed by the one or more hardware processors 102 is configured by the programmed instructions to generate a plurality of synthesized sequence of image frames based on the flow embedding, the panoptic label embedding and the panoptic image embedding associated with each of the plurality of raw input image frames using a trained multi Panoptic Geography Assistive Normalization (multi-PGAN) based image generator as illustrated in FIG. 6.

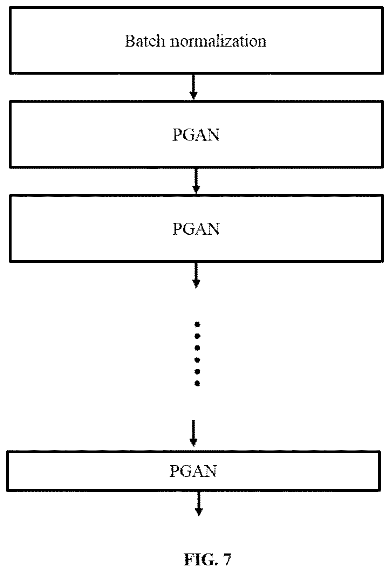

The multi-PGAN based image generator of FIG. 6 is derived from the proposed PGAN technique where inputs are panoptic image embedding, flow and label embedding as well previous frames outputs. The multi-PGAN generator includes a series of multi-PGAN residual blocks and up sampling layers. The structure of each multi-PGAN residual blocks is shown in FIG. 7.

The proposed PGAN architecture includes Geography map and panoptic mask data as illustrated in FIG. 8. Referring to FIG.8, Geography map helps in getting features learned from specific geography. Also, panoptic mask data helps in refining edge level details more accurately to give relatively more fine-tuned output as compared to existing solutions. PGAN is tuned using hyperparameters ($P1_G$, $P2_G$, $P1_P$, $P2_P$) which combines through normalization layer. This approach helps in attaining environment features information such that normalization layers do not wash away this useful information. The inputs to these PGAN blocks are flow, image and Panoptic label embedding which is based on encoder decoder architecture. Panoptic Label encoding uses encoder-decoder style to embed different instance input labels to different features which acts as one of the inputs to Multi PGAN in Image generator. Flow Embedding deals with optical flow outputs of previous frame and again fed through Multi PGAN block of Image generator. Image and Panoptic generator basically encode Image and panoptic frames respectively. Image encoder uses previously generated frames while panoptic encoder uses first frame panoptic. This helps to generate inputs for the multi-PGAN based Image Generator.

The discriminator architecture uses PatchGAN architecture as shown in FIG. 9 in which different real and synthesized image of distinct resolution are considered and then each one is fed to different discriminator based on 70x70 PatchGAN to get an output which would be consistent both locally and globally.

The objective functions in GANs consists for commonly used Loss function known as Hinge Loss, feature extractor loss, flow loss and sequence losses. Hinge loss is calculated as in (1) The generator tries to minimize and dicriminator tries to maximize the objective function value.

$$L_{Hinge}(G,D) = E_X\big[\max\big(0,(1-D(x))\big)\big] + E_z\left[\max\left(0,(1+D\big(G(z)\big))\right)\right] \qquad (1)$$

Here $E_x$, $E_z$ are expected value real inputs and random inputs respectively, $D(x)$ and $D(G(z))$ are expected estimate of discriminator for real instance to be real and fake instance to be real respectively. Feature extractor loss as in (2) is discriminator feature based on VGG19 Loss which is calculated using the below formula. $\emptyset_i(G)$, $\emptyset_i(R)$ are features of VGG19 layers of generated and real images.

$$L_{vgg} = |\emptyset_i(G) - \emptyset_i(R)| \qquad (2)$$

Flow loss is based on Our Optical Flow network architecture which contains: (i) Flow L1 loss: L1 loss with respect to ground truth flow (ii) Flow warp loss: L1 loss between warped and target image (iii) Flow mask loss: Loss of occlusion mask and (iv) Flow sequence loss: L1 loss between current and previous frames (0 for first frame). Calculation of each flow loss is done by as by changing respective input values x and y in (3). Combining all these objective functions the aim of the generator is to minimize and discriminator is to maximize the function value to get a model having good generative capability.

$$L(x,y) = \{L_1, L_2, \ldots L_n\}^T, \quad L_n = |x_n - y_n| \qquad (3)$$

At step 310 of the method 300, the insertion parameters obtaining module 208 executed by the one or more hardware processors 102 is configured by the programmed instructions to obtaining a plurality of insertion parameters pertaining to each of the plurality of target objects to be inserted, wherein the plurality of insertion parameters comprises an initial position, a speed information pertaining to each of the plurality of target objects, a random behavior to be added and a number of frames to add objects and, wherein the speed information pertaining to each of the plurality of target object is one of a) a speedup value b) a slowdown value and c) a constant speed value

At step 312 of the method 300, the synthetic dataset creation module 210 executed by the one or more hardware processors 102 is configured by the programmed instructions to creating a synthetic dataset by generating a plurality of enhanced image frames based on the plurality of target objects, the plurality of synthesized sequence of image frames, the plurality of insertion parameters pertaining to each of the plurality of target objects to be inserted, a plurality of backgrounds and a plurality of scaled synthetic image frames using a trained GenAI based Deep Learning network.

The plurality of enhanced images are evaluated using Fr' echet Inception Distance (FID), Kanade-Lucas-Tomasi (KLT) score and a Panoptic score

The written description describes the subject matter herein to enable any person skilled in the art to make and use the embodiments.

The embodiments of present disclosure herein address the unresolved problem of identifying product details/product names from marketing collateral images. The present disclosure is panoptic Segmentation based approach to create semantic labels and introduces a flow map-based methodology taking cues from a sequence of frames helps to address long time temporal coherence which is a key issue in generated data. This goes as an input to the Generative AI network and has a novel methodology to take care of the aspects of dynamic objects, scene changing and environment variations.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

It is intended that the disclosure and examples be considered as exemplary only, with a true scope of disclosed embodiments being indicated by the following claims.

## Claims

1. A processor implemented method (300), the method comprising:

   receiving (302), by one or more hardware processors, a plurality of raw input image frames associated with a video and a plurality of target objects to be inserted into the plurality of raw input image frames, wherein the plurality of raw input image frames are in a sequence, wherein the plurality of target object comprises a plurality of static objects and a plurality of dynamic objects;

   computing (304), by the one or more hardware processors, a flow embedding associated with each of the plurality of raw input image frames using a flow map based feature extraction technique;

   computing (306), by the one or more hardware processors, a panoptic label embedding and a panoptic image embedding associated with each of the plurality of raw input image frames using a panoptic segmentation technique;

   generating (308), by the one or more hardware processors, a plurality of synthesized sequence of image frames based on the flow embedding, the panoptic label embedding and the panoptic image embedding associated with each of the plurality of raw input image frames using a trained multi Panoptic Geography Assistive Normalization (multi-PGAN) based image generator, wherein the multi-PGAN is a generator network and an input of the multi-PGAN further comprises previous frames outputs, and wherein the multi-PGAN includes a geography map and a panoptic mask data;

   obtaining (310), by the one or more hardware processors, a plurality of insertion parameters pertaining to each of the plurality of target objects to be inserted, wherein the plurality of insertion parameters comprises an initial position, a speed information pertaining to each of the plurality of target objects, a random behavior to be added and a number of frames to add objects; and

   creating (312), by the one or more hardware processors, a synthetic dataset by generating a plurality of enhanced image frames based on the plurality of target objects, the plurality of synthesized sequence of image frames, the plurality of insertion parameters pertaining to each of the plurality of target objects to be inserted, a plurality of backgrounds and a plurality of scaled synthetic image frames using a trained GenAI based Deep Learning network.

2. The method as claimed in claim 1, wherein steps for extracting the flow embedding associated with each of the plurality of raw input image frames using a flow map based feature extraction technique comprises:

   receiving (402) a first image frame a second image frame from the plurality of raw input image frames, wherein the first image frame and the second image frame are consecutive images;

   generating (404) a plurality of panoptic segments pertaining to the first image frame and the second image frame using the panoptic segmentation technique;

   identifying (406) a plurality of similar instances from the first image frame and the second image frame based on a comparison between the plurality of panoptic segments pertaining to the first image frame and the second image frame, wherein the image frame consecutive to the second image frame is identified for comparison with the second frame if there are no similar instances and, wherein the comparison is repeated till last image frame from among the plurality of raw input image frames is compared; and

   computing (408) the flow embedding between the first image frame and the second image frame by fusing the plurality of similar instances between the first image frame and the second image frame.

3. The method as claimed in claim 1, wherein the plurality of enhanced images are evaluated using Fr'echet Inception Distance (FID), Kanade-Lucas-Tomasi (KLT) score and a Panoptic score.

4. The method as claimed in claim 1, wherein the speed information pertaining to each of the plurality of target object is one of a) a speedup value b) a slowdown value and c) a constant speed value.

5. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a plurality of raw input image frames associated with a video and a plurality of target objects to be inserted into the plurality of raw input image frames, wherein the plurality of raw input image frames are in a sequence, wherein the plurality of target object comprises a plurality of static objects and a plurality of dynamic objects; compute a flow embedding associated with each of the plurality of raw input image frames using a flow map based feature extraction technique; compute a panoptic label embedding and a panoptic image embedding associated with each of the plurality of raw input image frames using a panoptic segmentation technique; generate a plurality of synthesized sequence of image frames based on the flow embedding, the panoptic label embedding and the panoptic image embedding associated with each of the plurality of raw input image frames using a trained multi Panoptic Geography Assistive Normalization (multi-PGAN) based image generator, wherein the multi-PGAN is a generator network and an input of the multi-PGAN further comprises previous frames outputs, and wherein the multi-PGAN includes a geography map and a panoptic mask data; obtain a plurality of insertion parameters pertaining to each of the plurality of target objects to be inserted, wherein the plurality of insertion parameters comprises an initial position, a speed information pertaining to each of the plurality of target objects, a random behavior to be added and a number of frames to add objects; and create a synthetic dataset by generating a plurality of enhanced image frames based on the plurality of target objects, the plurality of synthesized sequence of image frames, the plurality of insertion parameters pertaining to each of the plurality of target objects to be inserted, a plurality of backgrounds and a plurality of scaled synthetic image frames using a trained GenAI based Deep Learning network.

6. The system of claim 5, wherein steps for extracting the flow embedding associated with each of the plurality of raw input image frames using a flow map based feature extraction technique comprises:

receiving a first image frame a second image frame from the plurality of raw input image frames, wherein the first image frame and the second image frame are consecutive images; generating a plurality of panoptic segments pertaining to the first image frame and the second image frame using the panoptic segmentation technique; identifying a plurality of similar instances from the first image frame and the second image frame based on a comparison between the plurality of panoptic segments pertaining to the first image frame and the second image frame, wherein the image frame consecutive to the second image frame is identified for comparison with the second frame if there are no similar instances and, wherein the comparison is repeated till last image frame from among the plurality of raw input image frames is compared; and computing the flow embedding between the first image frame and the second image frame by fusing the plurality of similar instances between the first image frame and the second image frame.

7. The system of claim 5, wherein the plurality of enhanced images are evaluated using Fr'echet Inception Distance (FID), Kanade-Lucas-Tomasi (KLT) score and a Panoptic score.

8. The system of claim 5, wherein the speed information pertaining to each of the plurality of target object is one of a) a speedup value b) a slowdown value and c) a constant speed value.

9. One or more non-transitory machine-readable information storage mediums comprising one or more instructions which when executed by one or more hardware processors cause:

receiving a plurality of raw input image frames associated with a video and a plurality of objects to be

inserted into the plurality of raw input image frames, wherein the plurality of raw input image frames are in a sequence, wherein the plurality of target object comprises a plurality of static objects and a plurality of dynamic objects;

computing a flow embedding associated with each of the plurality of raw input image frames using a flow map based feature extraction technique;

computing a panoptic label embedding and a panoptic image embedding associated with each of the plurality of raw input image frames using a panoptic segmentation technique;

generating a plurality of synthesized sequence of image frames based on the flow embedding, the panoptic label embedding and the panoptic image embedding associated with each of the plurality of raw input image frames using a trained multi Panoptic Geography Assistive Normalization (multi-PGAN) based image generator, wherein the multi-PGAN is a generator network and an input of the multi-PGAN further comprises previous frames outputs, and wherein the multi-PGAN includes a geography map and a panoptic mask data;

obtaining a plurality of insertion parameters pertaining to each of the plurality of target objects to be inserted, wherein the plurality of insertion parameters comprises an initial position, a speed information pertaining to each of the plurality of target objects, a random behavior to be added and a number of frames to add objects; and

creating a synthetic dataset by generating a plurality of enhanced image frames based on the plurality of target objects, the plurality of synthesized sequence of image frames, the plurality of insertion parameters pertaining to each of the plurality of target objects to be inserted, a plurality of backgrounds and a plurality of scaled synthetic image frames using a trained GenAI based Deep Learning network.

10. The one or more non-transitory machine-readable information storage mediums of claim 9, wherein steps for extracting the flow embedding associated with each of the plurality of raw input image frames using a flow map based feature extraction technique comprises:

receiving a first image frame a second image frame from the plurality of raw input image frames, wherein the first image frame and the second image frame are consecutive images;

generating a plurality of panoptic segments pertaining to the first image frame and the second image frame using the panoptic segmentation technique;

identifying a plurality of similar instances from the first image frame and the second image frame based on a comparison between the plurality of panoptic segments pertaining to the first image frame and the second image frame, wherein the image frame consecutive to the second image frame is identified for comparison with the second frame if there are no similar instances and, wherein the comparison is repeated till last image frame from among the plurality of raw input image frames is compared; and

computing the flow embedding between the first image frame and the second image frame by fusing the plurality of similar instances between the first image frame and the second image frame.

11. The one or more non-transitory machine-readable information storage mediums of claim 9, wherein the plurality of enhanced images are evaluated using Fr'echet Inception Distance (FID), Kanade-Lucas-Tomasi (KLT) score and a Panoptic score.

12. The one or more non-transitory machine-readable information storage mediums of claim 9, wherein the speed information pertaining to each of the plurality of target object is one of a) a speedup value b) a slowdown value and c) a constant speed value.

**Patentansprüche**

1. Prozessorimplementiertes Verfahren (300), wobei das Verfahren umfasst:

Empfangen (302), durch einen oder mehrere Hardwareprozessoren, einer Mehrzahl von Roh-Eingabe-Bildrahmen, die mit einem Video assoziiert sind, und einer Mehrzahl von Zielobjekten, die in die Mehrzahl von Roh-Eingabe-Bildrahmen einzufügen sind, wobei die Mehrzahl von Roh-Eingabe-Bildrahmen in einer Sequenz sind, wobei die Mehrzahl von Zielobjekten eine Mehrzahl von statischen Objekten und eine Mehrzahl von dynamischen Objekten umfasst;

Berechnen (304), durch den einen oder die mehreren Hardwareprozessoren, einer Flusseinbettung, die mit jedem der Mehrzahl von Roh-Eingabe-Bildrahmen assoziiert ist, unter Verwendung einer Flussabbildungsbasierten Merkmale-Extraktionstechnik;

Berechnen (306), durch den einen oder die mehreren Hardwareprozessoren, einer panoptischen Label-Einbettung und einer panoptischen Bildeinbettung, die mit jedem der Mehrzahl von Roh-Eingabe-Bildrahmen assoziiert ist, unter Verwendung einer panoptischen Segmentierungstechnik;

Erzeugen (308), durch den einen oder die mehreren Hardwareprozessoren, einer Mehrzahl von synthetisierten Sequenz von Bildrahmen basierend auf der Flusseinbettung, der panoptischen Label-Einbettung und der panoptischen Bildeinbettung, die mit jedem der Mehrzahl von Roh-Eingabe-Bildrahmen assoziiert ist, unter Verwendung eines trainierten Multi-Panoptical Geographie Assistive Normalization (Multi-PGAN)-basierten Bildgenerators, wobei der Multi-PGAN ein Generatornetzwerk ist und eine Eingabe des Multi-PGAN ferner vorherige Rahmenausgaben umfasst, und wobei der Multi-PGAN eine Geographiekarte und panoptische Maskendaten beinhaltet;

Erhalten (310), durch den einen oder die mehreren Hardwareprozessoren, einer Mehrzahl von Einfügungsparametern, die sich auf jedes der Mehrzahl von Zielobjekten beziehen, die einzufügen sind, wobei die Mehrzahl von Einfügungsparametern eine Anfangsposition, eine Geschwindigkeitsinformation, die sich auf jedes der Mehrzahl von Zielobjekten bezieht, ein zufälliges Verhalten, das hinzuzufügen ist, und eine Anzahl von Rahmen, die Objekte hinzufügen, umfasst; und

Erzeugen (312), durch den einen oder die mehreren Hardwareprozessoren, eines synthetischen Datensatzes durch Erzeugen einer Mehrzahl von verbesserten Bildrahmen basierend auf der Mehrzahl von Zielobjekten, der Mehrzahl von synthetisierten Sequenz von Bildrahmen, der Mehrzahl von Einfügungsparametern, die sich auf jedes der Mehrzahl von Zielobjekten beziehen, die einzufügen sind, einer Mehrzahl von Hintergründen und einer Mehrzahl von skalierten synthetischen Bildrahmen unter Verwendung eines trainierten GenAI-basierten Deep-Learning-Netzwerks.

2. Verfahren nach Anspruch 1, wobei Schritte zum Extrahieren der Flusseinbettung, die mit jedem der Mehrzahl von Roh-Eingabe-Bildrahmen assoziiert ist, unter Verwendung einer Flussabbildungsbasierten Merkmale-Extraktionstechnik umfassen:

Empfangen (402) eines ersten Bildrahmens und eines zweiten Bildrahmens aus der Mehrzahl von Roh-Eingabe-Bildrahmen, wobei der erste Bildrahmen und der zweite Bildrahmen aufeinanderfolgende Bilder sind;

Erzeugen (404) einer Mehrzahl von panoptischen Segmenten, die sich auf den ersten Bildrahmen und den zweiten Bildrahmen beziehen, unter Verwendung der panoptischen Segmentierungstechnik;

Identifizieren (406) einer Mehrzahl von ähnlichen Instanzen aus dem ersten Bildrahmen und dem zweiten Bildrahmen basierend auf einem Vergleich zwischen der Mehrzahl von panoptischen Segmenten, die sich auf den ersten Bildrahmen und den zweiten Bildrahmen beziehen, wobei der Bildrahmen, der auf den zweiten Bildrahmen folgt, zum Vergleich mit dem zweiten Rahmen identifiziert wird, wenn es keine ähnlichen Instanzen gibt, und wobei der Vergleich wiederholt wird, bis der letzte Bildrahmen aus der Mehrzahl von Roh-Eingabe-Bildrahmen verglichen wird; und

Berechnen (408) der Flusseinbettung zwischen dem ersten Bildrahmen und dem zweiten Bildrahmen durch Vereinigen der Mehrzahl von ähnlichen Instanzen zwischen dem ersten Bildrahmen und dem zweiten Bildrahmen.

3. Verfahren nach Anspruch 1, wobei die Mehrzahl von verbesserten Bildern unter Verwendung von Fr'echet Inception Distance (FID), Kanade-Lucas-Tomasi (KLT)-Score und einem panoptischen Score bewertet wird.

4. Verfahren nach Anspruch 1, wobei die Geschwindigkeitsinformation, die sich auf jedes der Mehrzahl von Zielobjekten bezieht, eines von a) einem Beschleunigungswert, b) einem Verlangsamungswert und c) einem konstanten Geschwindigkeitswert ist.

5. System (100), umfassend:
mindestens einen Speicher (104), der programmierte Anweisungen speichert; eine oder mehrere Eingabe/Ausgabe (E/A)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:

Empfangen einer Mehrzahl von Roh-Eingabe-Bildrahmen, die mit einem Video assoziiert sind, und einer Mehrzahl von Zielobjekten, die in die Mehrzahl von Roh-Eingabe-Bildrahmen einzufügen sind, wobei die Mehrzahl von Roh-Eingabe-Bildrahmen in einer Sequenz sind, wobei die Mehrzahl von Zielobjekten eine Mehrzahl von statischen Objekten und eine Mehrzahl von dynamischen Objekten umfasst;

Berechnen einer Flusseinbettung, die mit jedem der Mehrzahl von Roh-Eingabe-Bildrahmen assoziiert ist, unter Verwendung einer Flussabbildungsbasierten Merkmale-Extraktionstechnik;

Berechnen einer panoptischen Label-Einbettung und einer panoptischen Bildeinbettung, die mit jedem der Mehrzahl von Roh-Eingabe-Bildrahmen assoziiert ist, unter Verwendung einer panoptischen Segmentierungstechnik;

Erzeugen einer Mehrzahl von synthetisierten Sequenz von Bildrahmen basierend auf der Flusseinbettung, der panoptischen Label-Einbettung und der panoptischen Bildeinbettung, die mit jedem der Mehrzahl von Roh-Eingabe-Bildrahmen assoziiert ist, unter Verwendung eines trainierten Multi-Panoptical Geographie Assistive Normalization (Multi-PGAN)-basierten Bildgenerators, wobei der Multi-PGAN ein Generatornetzwerk ist und eine Eingabe des Multi-PGAN ferner vorherige Rahmenausgaben umfasst, und wobei der Multi-PGAN eine Geographiekarte und panoptische Maskendaten beinhaltet;

Erhalten einer Mehrzahl von Einfügungsparametern, die sich auf jedes der Mehrzahl von Zielobjekten beziehen, die einzufügen sind, wobei die Mehrzahl von Einfügungsparametern eine Anfangsposition, eine Geschwindigkeitsinformation, die sich auf jedes der Mehrzahl von Zielobjekten bezieht, ein zufälliges Verhalten, das hinzuzufügen ist, und eine Anzahl von Rahmen, die Objekte hinzufügen, umfasst; und

Erzeugen eines synthetischen Datensatzes durch Erzeugen einer Mehrzahl von verbesserten Bildrahmen basierend auf der Mehrzahl von Zielobjekten, der Mehrzahl von synthetisierten Sequenz von Bildrahmen, der Mehrzahl von Einfügungsparametern, die sich auf jedes der Mehrzahl von Zielobjekten beziehen, die einzufügen sind, einer Mehrzahl von Hintergründen und einer Mehrzahl von skalierten synthetischen Bildrahmen unter Verwendung eines trainierten GenAI-basierten Deep-Learning-Netzwerks.

6.  System nach Anspruch 5, wobei Schritte zum Extrahieren der Flusseinbettung, die mit jedem der Mehrzahl von Roh-Eingabe-Bildrahmen assoziiert ist, unter Verwendung einer Flussabbildungsbasierten Merkmale-Extraktionstechnik umfassen:

Empfangen eines ersten Bildrahmens und eines zweiten Bildrahmens aus der Mehrzahl von Roh-Eingabe-Bildrahmen, wobei der erste Bildrahmen und der zweite Bildrahmen aufeinanderfolgende Bilder sind;

Erzeugen einer Mehrzahl von panoptischen Segmenten, die sich auf den ersten Bildrahmen und den zweiten Bildrahmen beziehen, unter Verwendung der panoptischen Segmentierungstechnik;

Identifizieren einer Mehrzahl von ähnlichen Instanzen aus dem ersten Bildrahmen und dem zweiten Bildrahmen basierend auf einem Vergleich zwischen der Mehrzahl von panoptischen Segmenten, die sich auf den ersten Bildrahmen und den zweiten Bildrahmen beziehen, wobei der Bildrahmen, der auf den zweiten Bildrahmen folgt, zum Vergleich mit dem zweiten Rahmen identifiziert wird, wenn es keine ähnlichen Instanzen gibt, und wobei der Vergleich wiederholt wird, bis der letzte Bildrahmen aus der Mehrzahl von Roh-Eingabe-Bildrahmen verglichen wird; und

Berechnen der Flusseinbettung zwischen dem ersten Bildrahmen und dem zweiten Bildrahmen durch Vereinigen der Mehrzahl von ähnlichen Instanzen zwischen dem ersten Bildrahmen und dem zweiten Bildrahmen.

7.  System nach Anspruch 5, wobei die Mehrzahl von verbesserten Bildern unter Verwendung von Fr'echet Inception Distance (FID), Kanade-Lucas-Tomasi (KLT)-Score und einem panoptischen Score bewertet wird.

8.  System nach Anspruch 5, wobei die Geschwindigkeitsinformation, die sich auf jedes der Mehrzahl von Zielobjekten bezieht, eines von a) einem Beschleunigungswert, b) einem Verlangsamungswert und c) einem konstanten Geschwindigkeitswert ist.

9.  Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, veranlassen:

Empfangen einer Mehrzahl von Roh-Eingabe-Bildrahmen, die mit einem Video assoziiert sind, und einer Mehrzahl von Zielobjekten, die in die Mehrzahl von Roh-Eingabe-Bildrahmen einzufügen sind, wobei die Mehrzahl von Roh-Eingabe-Bildrahmen in einer Sequenz sind, wobei die Mehrzahl von Zielobjekten eine Mehrzahl von statischen Objekten und eine Mehrzahl von dynamischen Objekten umfasst;

Berechnen einer Flusseinbettung, die mit jedem der Mehrzahl von Roh-Eingabe-Bildrahmen assoziiert ist, unter Verwendung einer Flussabbildungsbasierten Merkmale-Extraktionstechnik;

Berechnen einer panoptischen Label-Einbettung und einer panoptischen Bildeinbettung, die mit jedem der Mehrzahl von Roh-Eingabe-Bildrahmen assoziiert ist, unter Verwendung einer panoptischen Segmentierungstechnik;

Erzeugen einer Mehrzahl von synthetisierten Sequenz von Bildrahmen basierend auf der Flusseinbettung, der panoptischen Label-Einbettung und der panoptischen Bildeinbettung, die mit jedem der Mehrzahl von Roh-Eingabe-Bildrahmen assoziiert ist, unter Verwendung eines trainierten Multi-Panoptical Geographie Assistive Normalization (Multi-PGAN)-basierten Bildgenerators, wobei der Multi-PGAN ein Generatornetzwerk ist und eine Eingabe des Multi-PGAN ferner vorherige Rahmenausgaben umfasst, und wobei der Multi-PGAN eine Geographiekarte und panoptische Maskendaten beinhaltet;

Erhalten einer Mehrzahl von Einfügungsparametern, die sich auf jedes der Mehrzahl von Zielobjekten beziehen, die einzufügen sind, wobei die Mehrzahl von Einfügungsparametern eine Anfangsposition, eine Geschwindigkeitsinformation, die sich auf jedes der Mehrzahl von Zielobjekten bezieht, ein zufälliges Verhalten, das hinzuzufügen ist, und eine Anzahl von Rahmen, die Objekte hinzufügen, umfasst; und

Erzeugen eines synthetischen Datensatzes durch Erzeugen einer Mehrzahl von verbesserten Bildrahmen basierend auf der Mehrzahl von Zielobjekten, der Mehrzahl von synthetisierten Sequenz von Bildrahmen, der Mehrzahl von Einfügungsparametern, die sich auf jedes der Mehrzahl von Zielobjekten beziehen, die einzufügen sind, einer Mehrzahl von Hintergründen und einer Mehrzahl von skalierten synthetischen Bildrahmen unter Verwendung eines trainierten GenAI-basierten Deep-Learning-Netzwerks.

10. Ein oder mehrere nichtflüchtige maschinenlesbare Informationsspeichermedien nach Anspruch 9, wobei Schritte zum Extrahieren der Flusseinbettung, die mit jedem der Mehrzahl von Roh-Eingabe-Bildrahmen assoziiert ist, unter Verwendung einer Flussabbildungsbasierten Merkmale-Extraktionstechnik umfassen:

Empfangen eines ersten Bildrahmens und eines zweiten Bildrahmens aus der Mehrzahl von Roh-Eingabe-Bildrahmen, wobei der erste Bildrahmen und der zweite Bildrahmen aufeinanderfolgende Bilder sind;

Erzeugen einer Mehrzahl von panoptischen Segmenten, die sich auf den ersten Bildrahmen und den zweiten Bildrahmen beziehen, unter Verwendung der panoptischen Segmentierungstechnik;

Identifizieren einer Mehrzahl von ähnlichen Instanzen aus dem ersten Bildrahmen und dem zweiten Bildrahmen basierend auf einem Vergleich zwischen der Mehrzahl von panoptischen Segmenten, die sich auf den ersten Bildrahmen und den zweiten Bildrahmen beziehen, wobei der Bildrahmen, der auf den zweiten Bildrahmen folgt, zum Vergleich mit dem zweiten Rahmen identifiziert wird, wenn es keine ähnlichen Instanzen gibt, und wobei der Vergleich wiederholt wird, bis der letzte Bildrahmen aus der Mehrzahl von Roh-Eingabe-Bildrahmen verglichen wird; und

Berechnen der Flusseinbettung zwischen dem ersten Bildrahmen und dem zweiten Bildrahmen durch Vereinigen der Mehrzahl von ähnlichen Instanzen zwischen dem ersten Bildrahmen und dem zweiten Bildrahmen.

11. Ein oder mehrere nichtflüchtige maschinenlesbare Informationsspeichermedien nach Anspruch 9, wobei die Mehrzahl von verbesserten Bildern unter Verwendung von Fr'echet Inception Distance (FID), Kanade-Lucas-Tomasi (KLT)-Score und einem panoptischen Score bewertet wird.

12. Ein oder mehrere nichtflüchtige maschinenlesbare Informationsspeichermedien nach Anspruch 9, wobei die Geschwindigkeitsinformation, die sich auf jedes der Mehrzahl von Zielobjekten bezieht, eines von a) einem Beschleunigungswert, b) einem Verlangsamungswert und c) einem konstanten Geschwindigkeitswert ist.

**Revendications**

1. Procédé mis en œuvre par processeur (300), le procédé comprenant :

la réception (302), par un ou plusieurs processeurs matériels, d'une pluralité de trames d'image d'entrée brutes associées à une vidéo et d'une pluralité d'objets cibles à insérer dans la pluralité de trames d'image d'entrée brutes, dans lequel la pluralité de trames d'image d'entrée brutes sont dans une séquence, dans lequel la pluralité d'objets cibles comprend une pluralité d'objets statiques et une pluralité d'objets dynamiques ;

le calcul (304), par les un ou plusieurs processeurs matériels, d'une intégration de flux associée à chacune de la pluralité de trames d'image d'entrée brutes en utilisant une technique d'extraction de caractéristiques basée sur une carte de flux ;

le calcul (306), par les un ou plusieurs processeurs matériels, d'une intégration d'étiquette panoptique et d'une intégration d'image panoptique associées à chacune de la pluralité de trames d'image d'entrée brutes en utilisant une technique de segmentation panoptique ;

la génération (308), par les un ou plusieurs processeurs matériels, d'une pluralité de séquences synthétisées de trames d'image sur la base de l'intégration de flux, de l'intégration d'étiquette panoptique et de l'intégration d'image panoptique associées à chacune de la pluralité de trames d'image d'entrée brutes en utilisant un générateur d'image basé sur une multi-normalisation assistée par géographie panoptique (multi-PGAN) entraînée, dans lequel la multi-PGAN est un réseau générateur et une entrée de la multi-PGAN comprend en outre des sorties de trames précédentes, et dans lequel la multi-PGAN inclut une carte de géographie et des données de masque panoptique ;

l'obtention (310), par les un ou plusieurs processeurs matériels, d'une pluralité de paramètres d'insertion relatifs à chacun de la pluralité d'objets cibles à insérer, dans lequel la pluralité de paramètres d'insertion comprend une position initiale, des informations de vitesse relatives à chacun de la pluralité d'objets cibles, un comportement aléatoire à ajouter et un nombre de trames à ajouter aux objets ; et

la création (312), par les un ou plusieurs processeurs matériels, d'un ensemble de données synthétiques en générant une pluralité de trames d'image améliorées sur la base de la pluralité d'objets cibles, de la pluralité de séquences synthétisées de trames d'image, de la pluralité de paramètres d'insertion relatifs à chacun de la pluralité d'objets cibles à insérer, d'une pluralité d'arrière-plans et d'une pluralité de trames d'image synthétiques mises à l'échelle en utilisant un réseau d'apprentissage profond basé sur l'IA générative formé.

2. Procédé selon la revendication 1, dans lequel les étapes d'extraction de l'intégration de flux associée à chacune de la pluralité de trames d'image d'entrée brutes en utilisant une technique d'extraction de caractéristiques basée sur une carte de flux comprennent :

la réception (402) d'une première trame d'image et d'une seconde trame d'image à partir de la pluralité de trames d'image d'entrée brutes, dans lequel la première trame d'image et la seconde trame d'image sont des images consécutives ;

la génération (404) d'une pluralité de segments panoptiques relatifs à la première trame d'image et à la seconde trame d'image en utilisant la technique de segmentation panoptique ;

l'identification (406) d'une pluralité d'instances similaires à partir de la première trame d'image et de la seconde trame d'image sur la base d'une comparaison entre la pluralité de segments panoptiques relatifs à la première trame d'image et à la seconde trame d'image, dans lequel la trame d'image consécutive à la seconde trame d'image est identifiée pour une comparaison avec la seconde trame s'il n'y a pas d'instances similaires et, dans lequel la comparaison est répétée jusqu'à ce que la dernière trame d'image parmi la pluralité de trames d'image d'entrée brutes soit comparée ; et

le calcul (408) de l'intégration de flux entre la première trame d'image et la seconde trame d'image en fusionnant la pluralité d'instances similaires entre la première trame d'image et la seconde trame d'image.

3. Procédé selon la revendication 1, dans lequel la pluralité d'images améliorées sont évaluées en utilisant la distance d'inception de Fréchet (FID), le score de Kanade-Lucas-Tomasi (KLT) et un score panoptique.

4. Procédé selon la revendication 1, dans lequel les informations de vitesse relatives à chacun de la pluralité d'objets cibles sont l'une parmi a) une valeur d'accélération, b) une valeur de ralentissement et c) une valeur de vitesse constante.

5. Système (100) comprenant :
au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :

recevoir une pluralité de trames d'image d'entrée brutes associées à une vidéo et une pluralité d'objets cibles à insérer dans la pluralité de trames d'image d'entrée brutes, dans lequel la pluralité de trames d'image d'entrée brutes sont dans une séquence, dans lequel la pluralité d'objets cibles comprend une pluralité d'objets statiques et une pluralité d'objets dynamiques ;

calculer une intégration de flux associée à chacune de la pluralité de trames d'image d'entrée brutes en utilisant une technique d'extraction de caractéristiques basée sur une carte de flux ;

calculer une intégration d'étiquette panoptique et une intégration d'image panoptique associées à chacune de la pluralité de trames d'image d'entrée brutes en utilisant une technique de segmentation panoptique ;

générer une pluralité de séquences synthétisées de trames d'image sur la base de l'intégration de flux, de l'intégration d'étiquette panoptique et de l'intégration d'image panoptique associées à chacune de la pluralité de trames d'image d'entrée brutes en utilisant un générateur d'image basé sur une multi-normalisation assistée par géographie panoptique (multi-PGAN) entraînée, dans lequel la multi-PGAN est un réseau générateur et une entrée de la multi-PGAN comprend en outre des sorties de trames précédentes, et dans lequel la multi-PGAN inclut une carte de géographie et des données de masque panoptique ;

obtenir une pluralité de paramètres d'insertion relatifs à chacun de la pluralité d'objets cibles à insérer, dans lequel la pluralité de paramètres d'insertion comprend une position initiale, des informations de vitesse relatives à chacun de la pluralité d'objets cibles, un comportement aléatoire à ajouter et un nombre de trames à ajouter aux objets ; et

créer un ensemble de données synthétiques en générant une pluralité de trames d'image améliorées sur la base de la pluralité d'objets cibles, de la pluralité de séquences synthétisées de trames d'image, de la pluralité de paramètres d'insertion relatifs à chacun de la pluralité d'objets cibles à insérer, d'une pluralité d'arrière-plans et d'une pluralité de trames d'image synthétiques mises à l'échelle en utilisant un réseau d'apprentissage profond basé sur l'IA générative formé.

6.  Système selon la revendication 5, dans lequel les étapes d'extraction de l'intégration de flux associée à chacune de la pluralité de trames d'image d'entrée brutes en utilisant une technique d'extraction de caractéristiques basée sur une carte de flux comprennent :

la réception d'une première trame d'image et d'une seconde trame d'image à partir de la pluralité de trames d'image d'entrée brutes, dans lequel la première trame d'image et la seconde trame d'image sont des images consécutives ;

la génération d'une pluralité de segments panoptiques relatifs à la première trame d'image et à la seconde trame d'image en utilisant la technique de segmentation panoptique ;

l'identification d'une pluralité d'instances similaires à partir de la première trame d'image et de la seconde trame d'image sur la base d'une comparaison entre la pluralité de segments panoptiques relatifs à la première trame d'image et à la seconde trame d'image, dans lequel la trame d'image consécutive à la seconde trame d'image est identifiée pour une comparaison avec la seconde trame s'il n'y a pas d'instances similaires et, dans lequel la comparaison est répétée jusqu'à ce que la dernière trame d'image parmi la pluralité de trames d'image d'entrée brutes soit comparée ; et

le calcul de l'intégration de flux entre la première trame d'image et la seconde trame d'image en fusionnant la pluralité d'instances similaires entre la première trame d'image et la seconde trame d'image.

7.  Système selon la revendication 5, dans lequel la pluralité d'images améliorées sont évaluées en utilisant la distance d'inception de Fréchet (FID), le score de Kanade-Lucas-Tomasi (KLT) et un score panoptique.

8.  Système selon la revendication 5, dans lequel les informations de vitesse relatives à chacun de la pluralité d'objets cibles sont l'une parmi a) une valeur d'accélération, b) une valeur de ralentissement et c) une valeur de vitesse constante.

9.  Un ou plusieurs supports de stockage d'informations lisibles par machine non transitoires comprenant une ou plusieurs instructions qui, lorsqu'elles sont exécutées par un ou plusieurs processeurs matériels, amènent :

la réception d'une pluralité de trames d'image d'entrée brutes associées à une vidéo et d'une pluralité d'objets cibles à insérer dans la pluralité de trames d'image d'entrée brutes, dans lequel la pluralité de trames d'image d'entrée brutes sont dans une séquence, dans lequel la pluralité d'objets cibles comprend une pluralité d'objets statiques et une pluralité d'objets dynamiques ;

le calcul d'une intégration de flux associée à chacune de la pluralité de trames d'image d'entrée brutes en utilisant une technique d'extraction de caractéristiques basée sur une carte de flux ;

le calcul d'une intégration d'étiquette panoptique et d'une intégration d'image panoptique associées à chacune de la pluralité de trames d'image d'entrée brutes en utilisant une technique de segmentation panoptique ;

la génération d'une pluralité de séquences synthétisées de trames d'image sur la base de l'intégration de flux, de l'intégration d'étiquette panoptique et de l'intégration d'image panoptique associées à chacune de la pluralité de trames d'image d'entrée brutes en utilisant un générateur d'image basé sur une multi-normalisation assistée par géographie panoptique (multi-PGAN) entraînée, dans lequel la multi-PGAN est un réseau générateur et une entrée de la multi-PGAN comprend en outre des sorties de trames précédentes, et dans lequel la multi-PGAN inclut une carte de géographie et des données de masque panoptique ;

l'obtention d'une pluralité de paramètres d'insertion relatifs à chacun de la pluralité d'objets cibles à insérer, dans lequel la pluralité de paramètres d'insertion comprend une position initiale, des informations de vitesse relatives à chacun de la pluralité d'objets cibles, un comportement aléatoire à ajouter et un nombre de trames à ajouter aux objets ; et

la création d'un ensemble de données synthétiques en générant une pluralité de trames d'image améliorées sur la base de la pluralité d'objets cibles, de la pluralité de séquences synthétisées de trames d'image, de la pluralité de paramètres d'insertion relatifs à chacun de la pluralité d'objets cibles à insérer, d'une pluralité d'arrière-plans et d'une pluralité de trames d'image synthétiques mises à l'échelle en utilisant un réseau d'apprentissage profond basé sur l'IA générative formé.

10. Un ou plusieurs supports de stockage d'informations lisibles par machine non transitoires selon la revendication 9, dans lequel les étapes d'extraction de l'intégration de flux associée à chacune de la pluralité de trames d'image d'entrée brutes en utilisant une technique d'extraction de caractéristiques basée sur une carte de flux comprennent :

la réception d'une première trame d'image et d'une seconde trame d'image à partir de la pluralité de trames d'image d'entrée brutes, dans lequel la première trame d'image et la seconde trame d'image sont des images consécutives ;

la génération d'une pluralité de segments panoptiques relatifs à la première trame d'image et à la seconde trame d'image en utilisant la technique de segmentation panoptique ;

l'identification d'une pluralité d'instances similaires à partir de la première trame d'image et de la seconde trame d'image sur la base d'une comparaison entre la pluralité de segments panoptiques relatifs à la première trame d'image et à la seconde trame d'image, dans lequel la trame d'image consécutive à la seconde trame d'image est identifiée pour une comparaison avec la seconde trame s'il n'y a pas d'instances similaires et, dans lequel la comparaison est répétée jusqu'à ce que la dernière trame d'image parmi la pluralité de trames d'image d'entrée brutes soit comparée ; et

le calcul de l'intégration de flux entre la première trame d'image et la seconde trame d'image en fusionnant la pluralité d'instances similaires entre la première trame d'image et la seconde trame d'image.

11. Un ou plusieurs supports de stockage d'informations lisibles par machine non transitoires selon la revendication 9, dans lequel la pluralité d'images améliorées sont évaluées en utilisant la distance d'inception de Fréchet (FID), le score de Kanade-Lucas-Tomasi (KLT) et un score panoptique.

12. Un ou plusieurs supports de stockage d'informations lisibles par machine non transitoires selon la revendication 9, dans lequel les informations de vitesse relatives à chacun de la pluralité d'objets cibles sont l'une parmi a) une valeur d'accélération, b) une valeur de ralentissement et c) une valeur de vitesse constante.

100

MEMORY 104

MODULES 106

REPOSITORY 110

108

I/O INTERFACE
112

HARDWARE
PROCESSORS
102

FIG. 1

Raw input image frames and target
objects to be inserted

Flow embedding computation module 202

Panoptic label embedding and panoptic
image embedding computation module 204

Synthesized sequence of image frames
generation module 206

Insertion parameters obtaining module 208

Synthetic dataset creation module 210

FIG. 2

300

receive a plurality of raw input image frames associated with a video and a plurality of target objects to be inserted into the plurality of raw input image frames, wherein the plurality of raw input image frames are in a sequence, wherein the plurality of target object comprises a plurality of static objects and a plurality of dynamic objects — 302

compute a flow embedding associated with each of the plurality of raw input image frames using a flow map based feature extraction technique — 304

compute a panoptic label embedding and a panoptic image embedding associated with each of the plurality of raw input image frames using a panoptic segmentation technique — 306

generate a plurality of synthesized sequence of image frames based on the flow embedding, the panoptic label embedding and the panoptic image embedding associated with each of the plurality of raw input image frames using a trained multi Panoptic Geography Assistive Normalization (multi-PGAN) based image generator — 308

obtain a plurality of insertion parameters pertaining to each of the plurality of target objects to be inserted, wherein the plurality of insertion parameters comprises an initial position, a speed information pertaining to each of the plurality of target objects, a random behavior to be added and a number of frames to add objects — 310

create a synthetic dataset by generating a plurality of enhanced image frames based on the plurality of target objects, the plurality of synthesized sequence of image frames, the plurality of insertion parameters pertaining to each of the plurality of target objects to be inserted, a plurality of backgrounds and a plurality of scaled synthetic image frames using a trained GenAI based Deep Learning network — 312

**FIG. 3**

400

receive a first image frame a second image frame from the plurality of raw input image frames, wherein the first image frame and the second image frame are consecutive images　402

generate a plurality of panoptic segments pertaining to the first image frame and the second image frame using the panoptic segmentation technique　404

identify a plurality of similar instances from the first image frame and the second image frame based on a comparison between the plurality of panoptic segments pertaining to the first image frame and the second image frame, wherein the image frame consecutive to the second image frame is identified for comparison with the second frame if there is no similar instances and, wherein the comparison is repeated till last image frame from among the plurality of raw input image frames　406

compute the flow embedding between the first image frame and the second image frame by fusing the plurality of similar instances between the first image frame and the second image frame　408

**FIG. 4**

```
                  ┌─────────────┐      ┌─────────────┐      ┌─────────────┐
            ──────▶│  8 layer CNN│      │Encoder (CNN │      │   Decoder   │
    Image          │   feature   │─────▶│   + LSTM)   │─────▶│  (Deconv +  │──────▶
    frames         │  extractor  │      │             │      │    LSTM)    │   Flow
                  └─────────────┘      └─────────────┘      └─────────────┘ embedding
```

**FIG. 5**

```
┌──────────────────────────────────────────────┐
│   Multi-PGAN residual block (2048, 1024)       │
│              Upsample (2)                       │
└──────────────────────────────────────────────┘
                    │
                    ▼
┌──────────────────────────────────────────────┐
│   Multi-PGAN residual block (1024, 512)        │
│              Upsample (2)                       │
└──────────────────────────────────────────────┘
                    │
                    ▼
┌──────────────────────────────────────────────┐
│   Multi-PGAN residual block (512, 256) Upsample│
│                   (2)                           │
└──────────────────────────────────────────────┘
                    │
                    ▼
┌──────────────────────────────────────────────┐        ┌──────────────────┐
│   Multi-PGAN residual block (256, 128) Upsample│        │   Embeddings:    │
│                   (2)                           │        │  Panoptic label, │
└──────────────────────────────────────────────┘        │  image and flow  │
                    │                                     └──────────────────┘
                    ▼
┌──────────────────────────────────────────────┐
│   Multi-PGAN residual block (128, 64) Upsample │
│                   (2)                           │
└──────────────────────────────────────────────┘
                    │
                    ▼
┌──────────────────────────────────────────────┐
│   Multi-PGAN residual block (64, 32) Upsample  │
│                   (2)                           │
└──────────────────────────────────────────────┘
                    │
                    ▼
┌──────────────────────────────────────────────┐
│             Conv (3x3) (32,3)) Relu            │
└──────────────────────────────────────────────┘
```

**FIG. 6**

**FIG. 7**

**FIG. 8**

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321063543

**Non-patent literature cited in the description**

- **SONI RAJAT KUMAR et al.** *Deep Learning Based Approach to Generate Realistic Data for ADAS Applications*